# EUROPÄISCHE PATENTSCHRIFT

(11) **EP 2 290 418 B1**
(45) Veröffentlichungstag und Bekanntmachung des Hinweises auf die Patenterteilung: **03.06.2015**
(21) Anmeldenummer: 10405153.7
(22) Anmeldetag: 20.08.2010
(51) Int. Cl.: G02B 6/44

(54) **Vorrichtung zur Ablage und Handhabung von Lichtwellenleitern**
Device for storage and handling of lightguides
Dispositif pour le stockage et la manipulation de guides d'ondes

(30) Priorität: 27.08.2009 CH 13292009
(43) Veröffentlichungstag der Anmeldung: 02.03.2011
(60) Teilanmeldung: 13185965.4
(73) Patentinhaber: Reichle & De-Massari AG, 8622 Wetzikon (CH)
(72) Erfinder: Muehlegg-Ruef, Marion, 8717 Benken (CH); Fischer, Thomas, 8640 Rapperswil (CH); Holzer, Manfred, 8486 Rikon (CH); Möder, Andreas, 99189 Erfurt (DE)
(74) Vertreter: Daub, Thomas

(56) Entgegenhaltungen:
- EP-A- 0 864 895
- EP-A- 1 843 182
- EP-A- 1 921 479
- WO-A1-95/07484
- WO-A1-2008/033997
- DE-A1- 4 405 666
- US-A1- 2003 223 725

## Beschreibung

Die Erfindung betrifft die Ablage und die Handhabung von Lichtwellenleitern. Sie betrifft insbesondere eine Vorrichtung für die Ablage und Handhabung von Lichtwellwellenleiterkabeln, Lichtwellenleiter-Bündeladern und/oder einzelnen Lichtwellenleitern.

Es ist bekannt, an Abzweigstellen von Lichtwellenleitern sogenannte Kabelmuffen zu verwenden. In einer solchen Kabelmuffe werden mehrere Lichtwellenleiterkabel zusammengeführt. Jedes Lichtwellenleiterkabel weist im Allgemeinen mehrere sogenannte Bündeladern auf, wobei jede Bündelader eine Mehrzahl von einzelnen optischen Lichtwellenleitern (Fasern) beinhaltet, bspw. zwischen 12 und 24 Lichtwellenleiter. In einer Kabelmuffe können mit Hilfe sogenannter Spleisskassetten die einzelnen Fasern individuell geführt und miteinander nach Bedarf verspleisst, d.h. gekoppelt werden. Wegen der Möglichkeit der individuellen Behandlung einzelner Fasern spricht man auch vom ,Single Circuit Management' (SCM).

Das Single Circuit Management kommt auch an Abzweigstellen zum Einsatz, die nicht als Kabelmuffen ausgebildet sind. In solchen Fällen ist ein Single-Circuit-Management-System bspw. auf einem Paneel oder in einer Schublade, bspw. in einem Hausanschlusskasten installiert.

Eine bevorzugte Eigenschaft solcher SCM-Systeme ist eine hohe Flexibilität. Idealerweise sind an einer Kabelmuffe oder einem anders ausgebildeten SCM-System nachträglich sowohl Erweiterungsarbeiten - also bspw. die Handhabung eines zusätzlichen Kabels mit entsprechenden Verspleissungen mit bereits in der Kabelmuffe vorhandenen oder neu hinzukommenden Fasern - als auch Änderungen vornehmbar, ohne dass bestehende, von den Arbeiten nicht betroffene Verbindungen unterbrochen werden müssten.

Es ist eine Aufgabe der Erfindung, eine Vorrichtung zur Handhabung von Lichtwellenleitern zur Verfügung zu stellen, welche Ansätze zur vereinfachten Handhabung und/oder zu einer verbesserten Flexibilität zur Verfügung stellt. Bevorzugt sollte die Vorrichtung kostengünstig in der Herstellung und/oder in der Wartung sein.

Gemäss einem **ersten** Aspekt der Erfindung ist die Vorrichtung vorzugsweise als Kabelmuffe ausgebildet und weist eine Spleisskassetten-Aufnahme für Ablage-und/oder Spleisskassetten auf, wobei die Spleisskassetten-Aufnahme eine Mehrzahl von Befestigungsstellen für die Befestigung von Spleisskassetten oder ähnlichen Vorrichtungen auf. Gemäss dem ersten Aspekt der Erfindung weist die Spleisskassetten-Aufnahme mindestens ein Modul auf, welches selbsttragend ist und dafür ausgerüstet ist, mit weiteren gleichartigen Module zu einer selbsttragenden Struktur zusammengesetzt zu werden.

Die Eigenschaft ,selbsttragend' bedeutet hier, dass keine Tragstruktur (Tragrahmen oder dergleichen) vorgegebener Grösse benötigt wird, damit das Modul bzw. die Module mechanisch stabil ist/sind.

Die Stapelbarkeit der Module hat zur Folge, dass die Spleisskassetten-Aufnahme flexibel erweiterbar ist. Die Module sind beispielsweise zu einer distalen Richtung hin stapelbar, d.h. die nacheinander angefügten Module haben einen zunehmenden Abstand vom Ort, wo die Lichtwellenleiterkabel in die Vorrichtung münden. Die Erweiterung kann daher vorgenommen werden, ohne dass bestehende Verbindungen unterbrochen werden müssten, oft gar ohne dass bestehende Faserführungen- und Verbindungen in irgendeiner Art betroffen wären. Die Erweiterbarkeit im Sinne des ersten Aspekts der Erfindung ist unabhängig von einer anfänglichen Auslegung der Grösse der Vorrichtung. Bei einer Erweiterung über eine anfänglich geplante Grösse hinaus muss unter Umständen höchstens eine Muffenhaube durch eine entsprechend grössere Haube ersetzt werden.

Gemäss einer besonderen Ausfühnmgsform ist jedes Modul aus zwei Modul-Schalen aufgebaut, welche Rückseite-an-Rückseite aneinander befestigbar sind. Die Modul-Schalen können baugleich oder voneinander verschieden sein.

Solche Modul-Schalen sind im Prinzip auch einzeln in Aufbauten verwendbar, in denen die Vorrichtung keine Kabelmuffe ist, sondern bspw. in einer Schublade oder auf einem Paneel angeordnet ist; in einem solchen Fall wird eine Platte (Schubladenboden, Paneelplatte, Kastenwand) eine Trägerstruktur bilden.

Die Befestigung der Modulschalen aneinander sowie der Module aufeinander kann über einen Schnappmechanismus und/oder auch mittels separater Befestigungsmittel, bspw. Schrauben, erfolgen.

Die Befestigung der Spleisskassetten - oder anderen ähnlichen Elementen - an der Spleisskassetten-Aufnahme kann so sein, dass die Spleisskassetten schwenkbar sind, d.h. dass die Aufnahmemittel ein Scharnier bilden.

Bevorzugt weist das mindestens eine Modul der Spleisskassetten-Aufnahme beidseitig je einen Führungskanal zur Führung von Fasern, die von einem proximal der Spleisskassetten-Aufnahme liegenden Aufteiler herkommen, gegebenenfalls bis zu einem weiteren Modul auf.

Ebenfalls bevorzugt weist das Modul Führungsstrukturen zum Führen von Fasern von einem Führungskanal zu einem mindestens ungefähr auf der Schwenkachse der Befestigung liegenden Übergang zur Spleisskassette auf.

Gemäss einer bevorzugten Ausführungsform sind die Scharniere symmetrisch in dem Sinn, dass die Spleisskassetten in zwei sich um 180° unterscheidenden Orientierungen schwenkbar befestigt werden können d.h. eine Befestigung ,Auf Kopf ist möglich. Die Sicherung der Verbindung gegen eine axiale (in Bezug auf eine Scharnierachse) Verschiebung der Spleisskassette kann in einfachster Weise mit einer einrastenden Klinke bewerkstelligt werden.

Das hier erwähnte Prinzip des bezüglich zweier Orientierungen der Spleiskassette symmetrischen Scharniers kann im Prinzip auch mit einer anderen Spleisskassetten-Aufnahme als einer mit der hier erwähnten selbsttragenden Struktur realisiert werden, bspw. einer Spleisskassetten-Aufnahme mit Tragrahmen.

Exemplarisch weist die als Kabelmuffe ausgebildete Vorrichtung nebst einer Spleisskassetten-Aufnahme für Ablage- und/oder Spleisskassetten, welche Spleisskassetten-Aufnahme eine Mehrzahl von Befestigungsstellen für die Befestigung von Spleisskassetten oder ähnlichen Vorrichtungen aufweist, einen distalen Abschluss (Kopfteil) auf, der distal an die Spleisskassetten-Aufnahme anschliesst. Dieser distale Abschluss weist eine Führungspartie auf, welche mit einem entsprechenden Führungselement einer Muffenhaube der Vorrichtung zusammenwirkt und die Spleisskassetten-Aufnahme gegen federnde oder schwingende Auslenkungen des freien Endes sichert. Durch diese Massnahme wird die Spleisskassetten-Aufnahme auch dann mechanisch sehr stabil, wenn eine grössere Anzahl - beispielsweise drei, vier oder mehr - Module aufeinander gestapelt werden.

Der Abschluss kann ausser der Führungspartie auch Führungsstrukturen zum Führen von Fasern, beispielsweise von einem Führungskanal der Spleisskassetten-Aufnahme zum anderen, aufweisen.

Der Abschluss kann aus zwei Abschluss-Schalen, einstückig oder aus einer anderen Anzahl von Bausteinen zusammengesetzt sein.

Exemplarisch geht es ebenfalls um eine Vorrichtung zur Ablage und Handhabung von Lichtwellenleitern, aufweisend eine Spleisskassetten-Aufnahme und einen Aufteiler zum individuellen Aufteilen von als Faserbündeln herangeführte Lichtwellenleiter-Fasern, wobei die Spleisskassetten-Aufnahme eine Mehrzahl von Führungskanälen aufweist und die Fasern von der Spleisskassetten-Aufnahme wahlweise zu einem der Führungskanäle führbar sind, und wobei die Spleisskassetten-Aufnahme Mittel zum Halten einer Mehrzahl von Spleisskassetten oder anderen Faserfuhrungsmitteln aufweist. Exemplarisch weist nun die Vorrichtung ausserdem eine Ablageeinrichtung für Bündelader-Überlängen auf, welche Ablageeinrichtung die Bündelader-Überlängen in einer Ebene führen, welche von der Ebene verschieden ist, in welcher die einzelnen Fasern im Aufteiler und/oder in der Spleisskassetten-Aufnahme geführt sind. Die Ablageeinrichtung wird aussen (also ,anterior' oder ,posterior' in Bezug auf die von der Faserführung im Aufteiler aufgespannte Ebene) auf dem Aufteiler und/oder beispielsweise auch auf der Spleisskassetten-Aufnahme befestigt.

Die Ablageeinrichtung ist vorzugsweise an verschiedenen Positionen entlang der proximal-distalen Achse befestigbar. Bei einer Befestigung auf dem Aufteiler - und/oder je nach dem auch bei einer Befestigung an der Spleisskassetten-Aufnahme - werden im Aufteiler geführte Fasern in keiner Weise beeinträchtigt, d.h. es wird durch die Ablageeinrichtung zusätzlicher Stauraum geschaffen ohne dass zusätzlicher Platzbedarf entstünde. Auch kann ein Befestigen, Verschieben, Verändern oder Entfernen der Ablageeinrichtung jederzeit geschehen, ohne dass die Führung von Fasern im Aufteiler, der Spleisskassetten-Aufnahme oder einer Spleisskassette in irgendeiner Weise beeinträchtigt würde.

Gemäss einer bevorzugten Ausführungsform weist die Ablageeinrichtung mindestens zwei Halteschalen auf, die in einem flexiblem Abstand zueinander montierbar sind und in sowie zwischen denen die Bündeladern in Schleifen ablegbar sind.

Die Ablageeinrichtung weist beispielsweise eine Mehrzahl von Haltezungen auf, mittels welchen sie auf den Aufteiler und/oder die Spleisskassetten-Aufnahme aufschappbar ist, auch eine Befestigung mittels separater Befestigungsmittel (Schrauben oder dergleichen) ist möglich.

Exemplarisch geht es um eine Vorrichtung zur Ablage und Handhabung von Lichtwellenleitern, aufweisend eine Spleisskassetten-Aufnahme und einen Aufteiler zum individuellen Aufteilen von als Faserbündeln herangeführten Lichtwellenleiter-Fasern, wobei die Spleisskassetten-Aufnahme eine Mehrzahl von Führungskanälen aufweist und die Fasern von der Spleisskassetten-Aufnahme wahlweise zu einem der Führungskanäle führbar sind, und wobei die Spleisskassetten-Aufnahme Mittel zum Halten einer Mehrzahl von Spleisskassetten oder anderen Faserführungsmitteln aufweist. Als Single-Circuit-Management-Vorrichtung weist die Vorrichtung einen Aufteiler auf, in welchem Führungsstrukturen ausgebildet sind, die im Wesentlichen alle von der proximalen Richtung herangeführten Fasern oder Faserbündel auf eine laterale Seite hin zu einer Verzweigungsstelle führt, von welcher aus die Führungsstrukturen eine erste Spur definieren, die zu einer ersten lateralen Kopplungsstelle führen, von wo aus die Fasern in einen ersten lateralen Führungskanal der Spleisskassetten-Aufnahme führbar sind, und eine zweite Spur, die zu einer zweiten lateralen Kopplungsstelle führen, von wo aus die Fasern in einen zweiten lateralen Führungskanal der Spleisskassetten-Aufnahme führbar sind. Die lateralen Kopplungsstellen liegen an lateral entgegengesetzten Seiten, also kontralateral.

"Im Wesentlichen alle" heisst hier, dass entweder alle Fasern zur lateralen Verzweigungsstelle führbar sind, oder dass allenfalls höchstens ein kleiner Anteil von bspw. höchstens 10% der möglichen Fasern nicht zur Verzweigungsstelle führbar ist; dieser kleine Anteil von Fasern wird dann direkt auf einem gradlinigen Weg in distaler Richtung einem Führungskanal der Spleisskassetten-Aufnahme zugeführt, ohne die Möglichkeit eines lateralen Seitenwechsels. Beispielsweise können maximal die Fasern zweier Bündeladern diesen direkten, gradlinigen Weg an der Verzweigungsstelle vorbei nehmen.

Von der Verzweigungsstelle aus sind die Fasern also wahlweise zu einem der Führungskanäle der Spleisskassetten-Aufnahme führbar. ,Wahlweise' bedeutet hier nicht notwendigerweise, dass von der Verzweigungsstelle eine Spur zu jedem Führungskanal, bspw. auch den in Bezug auf eine bestimmte Verzweigungsstelle rückseitigen Führungskanal führbar sind, auch wenn das bevorzugt ist. Vielmehr besteht mindestens die Wahl zwischen der ersten und der zweiten Spur und folglich zwischen mindestens zwei kontralateralen Führungskanälen.

Die erste Spur kann im Wesentlichen gradlinig von der Verzweigungsstelle in die distale Richtung führen. Die zweite Spur weist dann vorzugsweise einen S-förmigen Verlauf auf.

Durch diesen Ansatz wird bewirkt, dass von der Verzweigungsstelle aus im Wesentlichen alle von der proximalen Richtung herangeführten Fasern gleichsinnig laufend wahlweise auf die eine oder andere Seite, verteilt werden können. Ein Auskreuzfeld von bspw. von links kommenden Fasern mit von rechts kommenden Fasern, wie das der Stand der Technik für die Führung von Fasern mit möglichem Seitenwechsel vorsieht, ist nicht vorgesehen. Daraus ergibt sich eine erhebliche Vereinfachung beim Umorganisieren bestehender Faserverläufe. Trotzdem kann sich die Bündeladeraufname auf die gesamte Breite des Aufteilfeldes erstrecken.

Zusätzlich können optional von der Verzweigungsstelle, von der ersten Spur und/oder von der zweiten Spur aus Fasern von der Vorder- auf die Rückseite oder von der Rückseite auf die Vorderseite führbar sein. Zu diesem Zweck kann ein Durchbruch im Aufteiler vorhanden sein.

Die Führungsstrukturen sind dabei so ausgebildet, dass die vorgeschriebenen oder empfohlenen Minimalradien von beispielsweise 20 mm als vorgeschriebener Minimalradius oder von 40 mm als empfohlener, optimaler Minimalradius eingehalten werden.

In Vorrichtungen gemäss den verschiedenen Aspekten der Erfindung können unterschiedliche Spleisskassetten zum Einsatz kommen, darunter auch Spleisskassetten wie sie aus dem Stand der Technik bekannt sind. Gemäss speziellen Ausführungsformen weist mindestens eine Spleisskassette nebst einem Spleisskassettenkörper einen auswechselbaren Spleissschutzhalter zum gleichzeitigen Fixieren einer Mehrzahl von Spleissen auf. Anstelle eines solchen Spleissschutzhalters kann auch ein Halter für mindestens einen Splitter (Strahlteiler) oder ein kombinierter Splitter-Spleissschutz-Halter eingesetzt werden.

Exemplarisch weist ein Spleissschutzhalter einer Spleisskassette - der Spleissschutzhalter kann auswechselbar oder einstückig mit dem Kassettenkörper sein - Mittel zum individuellen Halten von mindestens zwei, vorzugsweise drei Spleissschutzeinrichtungen übereinander auf, wobei Klemmmittel für die erste, zweite und gegebenenfalls dritte Spleissschutzeinrichtung zueinander in axialer Richtung (in Bezug auf die Faserachse) versetzt angeordnet sind.

Aus der Patentveröffentlichung EP1843182 ist eine Vorrichtung zur Ablage und Handhabung von Lichtwellenleitern entsprechend der Präambel des Anspruchs 1 bekannt. Die Vorrichtung enthält Spleisskassetten Aufnahmen welche auf eine doppelwandige Trägerplatte aufmontiert werden.

Aus der Patentveröffentlichung EP0864895 ist ein modular gestapelter Aufbau von Spleisskassetten-Aufnahmen mit Einschubfächern und mit separaten Faserführungskanälen bekannt.

Aus dem Stand der Technik ist zwar an sich bekannt, mehrere in Spleissschutzeinrichtungen geschützte Spleisse übereinander zu führen, um die Spleissaufnahmedichte markant zu erhöhen. Die dafür beispielsweise in der WO 2009/001012 vorgestellten Führungs- und Klemmmittel - weisen jeweils direkt übereinander angeordnete Führungsmittel auf. Eine durch eine der Spleissschutzeinrichtungen verursachte Auslenkung der Klemmmittel entgegen einer federnden Kraft hat automatisch zur Folge, dass eine andere, darüber oder darunter liegende Spleissschutzeinrichtung weniger stark oder gar nicht geklemmt wird. Bei den vorhandenen recht grossen Fertigungstoleranzen von gängigen Spleissschutzeinrichtungen - insbesondere vom Schrumpfschlauch (,Heat Shrink')-Typ - hat das zur Folge, dass viele Spleisse relativ lose im Spleissschutzhalter liegen. Der Ansatz gemäss der Erfindung mit individuellen, axial versetzten Halte- und oder Klemmitteln löst dieses Problem.

Die Vorrichtung kann als Kabelmuffe ausgebildet sein, oder auch als Single Circuit-Management-Vorrichtung an einer Platte oder einem Schubladenboden befestigt vorliegen.

In diesem Text werden die Orientierung und Richtungen betreffende Relativbegriffe wie "oben", "unten", "links" "rechts", "Vorderseite", Rückseite" "vorne" und "hinten" etc. verwendet. Diese dienen der besseren Verständlichkeit der Beschreibung und sind in Bezug auf die in den Figuren dargestellte Orientierung zu verstehen, in welcher "proximal" "unten" ist und "distal" "oben" entspricht. Selbstverständlich bedeuten die Begriffe nicht, dass die Vorrichtung - bspw. die Kabelmuffe - in einer bestimmten Orientierung zu verwenden ist. Es ist bspw. keinesfalls ausgeschlossen, dass die Muffe in einer umgekehrten Anordnung (also Oberseite mit Unterseite vertauscht) eingebaut wird. Insbesondere wenn die Vorrichtung keine Muffe ist sondern bspw. als einseitiges Modul in einer Schublade oder auf einem Paneel vorhanden ist, sind auch horizontale Orientierungen ohne Weiteres denkbar.

Nachfolgend werden Ausführungsbeispiele von Aspekten der Erfindung anhand von Zeichnungen näher beschrieben. In den Zeichnungen bezeichnen gleiche Bezugszeichen gleiche oder analoge Elemente. Es zeigen:
- Figur 1 eine Darstellung einer Kabelmuffe ohne Muffenhaube;
- Figur 2 die Elemente eines Moduls einer Spleisskassetten-Aufnahme;
- Figur 3 das Stapeln zweier Module gemäss Figur 2;
- Figur 4 einen Verstärkungshalter für ein Modul gemäss Figur 2;
- Figur 5 ein Detail eines Scharniers zwischen Spleisskassetten-Aufnahme und Spleisskassette;
- Figur 6 einen Schnitt durch einen distalen Endbereich einer Muffe mit Muffenhaube;
- Figur 7 einen Abschluss einer Spieisskassetten-Aufnahme in einer Kabelmuffe;
- Figur 8 eine Bündelader-Ablageeinrichtung;
- Figuren 9 und 10 Anwendungen der Bündelader-Ablageeinrichtung;
- Figuren 11 und 12 die Wirkungsweise respektive Bestandteile des Aufteilers;
- Figur 13 Möglichkeiten der Faserführung auf einer Spleisskassette;
- Figuren 14-19 Möglichkeiten für die Halterung von Spleissen, Splittern und dergleichen auf einer Spleisskassette;
- Figur 20 einen Spleissschutzhalter für Spleisse auf mehreren Ebenen; und
- Figur 21 eine Darstellung des distalen Endbereichs der Muffe, die auch einen Werkzeughaltedeckel zeigt.

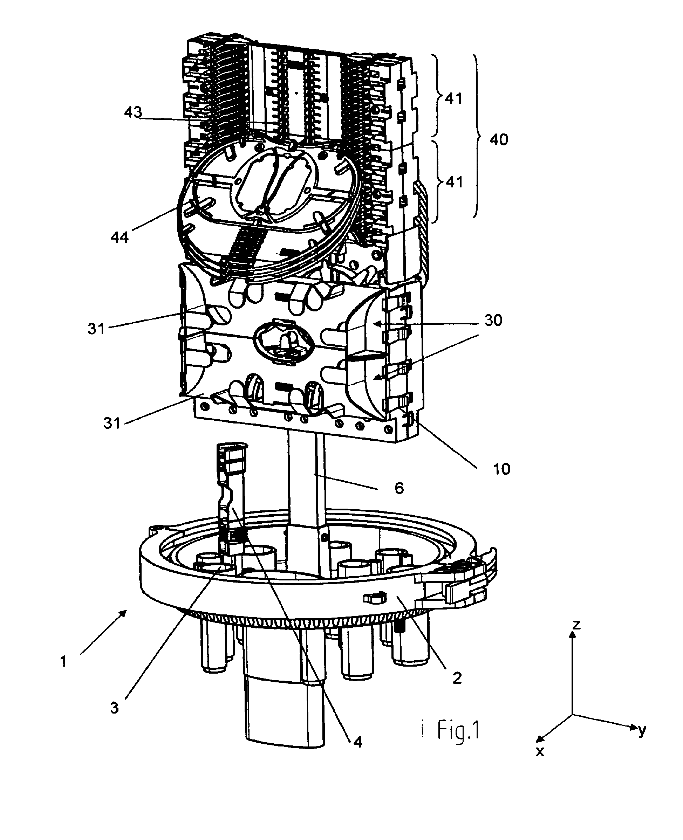

**Figur 1** zeigt eine als erfindungsgemässe Vorrichtung ausgestaltete Kabelmuffe 1. Die Basis bildet ein Muffenboden 2 mit einer Mehrzahl von Kabeleinführungen 3 für optische Kabel. Vom Boden abstehend nach innen sieht man ein Kabelbefestigungsmittel 4 für die Befestigung und/oder Zugentlastung; an diesen können mit Kabelbindern, Briden oder dergleichen die durch die Kabeleinfiihrungen geführten Kabel befestigt werden. Das Kabelbefestigungsmittel 4 ist mit dem Muffenboden 2 beispielsweise verschraubt. Am Muffenboden 2 ist ein Träger 6 (oder Sockel) befestigt, der einen Aufteiler 10 trägt. Im Bereich des Aufnahmeträgers sind die Kabelmäntel im Allgemeinen entfernt, und die einzelnen Bündelader werden in die Bündeladeraufnahme 11 des Aufteilers 10 geführt. Aussenseitig am Aufteiler 10 ist eine Ablageeinrichtung 30 für Bündelader-Überlängen angebracht, die nachstehend noch eingehender beschrieben wird. An den Aufteiler 10 schliesst eine Mehrzahl von Modulen 41 der Spleisskassetten-Aufnahme 40 an. Die Module 41 sind je baugleich und weisen in der dargestellten Ausführungsform je zwei beispielsweise ebenfalls untereinander baugleiche Modul-Schalen 42 auf. An jedem Modul ist eine Mehrzahl Zapfenführungen 43 zur Bildung von Scharnieren vorhanden, an denen je eine Spleisskassette 44, eine Überlängen-Kassete, oder ein anderes Bauteil schwenkbar befestigt werden kann.

In Figur 1 ist auch ein Bezugssystem eingezeichnet. Dabei ist die x-Achse die anterior-posteriore Achse, die y-Achse entspricht der transversalen Achse, und die z-Achse ist die longitudinale, d.h. proximal-distale Achse.

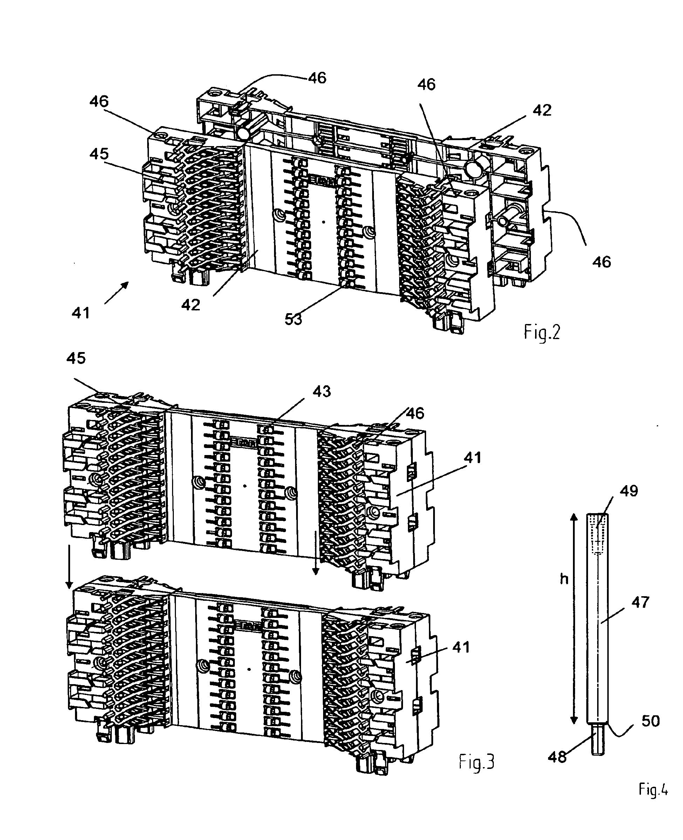

**Figur 2** zeigt den Aufbau eines Moduls 41 aus zwei Modul-Schalen 42. Die Modul-Schalen 42 sind Rückseite an Rückseite aufeinander aufsteckbar und beispielsweise so ausgebildet, dass sie durch einen Schnappmechanismus ohne zusätzliche Fixiermittel aneinander halten. Zusätzlich ist natürlich auch die Verwendung von solchen Fixiermitteln - Schrauben oder dergleichen - nicht ausgeschlossen. Wie man das in **Figur 3** besonders gut sieht, sind baugleiche Module 41 aufeinander aufschnappbar, so dass die Grösse der Spleisskassetten-Aufnahme 40 durch Aneinanderreihen einer frei wählbaren Anzahl von Modulen ausbaubar ist. Es können bis zu vier oder mehr Module 41 aufeinander gestapelt werden.

Die Module bilden zusammen eine rahmenlose, selbsttragende Struktur. Durch Zufügen - oder entfernen - von Modulen ist eine variable, bedarfsgerechte Erweiterung oder Reduzierung unabhängig von der Grösse und Ausnützung eines bestehenden Aufbaus möglich, und zwar ohne dass der Betrieb von bestehenden, von der Veränderung nicht betroffenen Verbindungen unterbrochen werden müsste.

Die Module 41 der Spleisskassetten-Aufnahme 40 weisen nebst den Zapfenführungen 43 auch beidseitig auf der Vorder- und Rückseite je einen Führungskanal 46 zur vertikalen Führung der Fasern sowie beidseitige Führungsstrukturen 45 zur geführten Aufnahme von Fasern auf, welche beispielsweise über die Spleisskassetten-Aufnahme auf eine Spleisskassette oder ein anderes an der Spleisskassetten-Aufnahme befestigtes Element führen. In der Spleisskassetten-Aufnahme erfolgt also die Verteilung der einzelnen, vom Aufteiler 10 herkommenden Fasern auf die Spleisskassetten oder dergleichen. Die einander entsprechenden Führungskanäle 46 einander benachbarter Module 41 fluchten zueinander und münden ineinander.

Ergänzend zum Schnappmechanismus, mit dem Module aufeinander stapelbar sind, können die Module auch zusätzliche oder ergänzende Verstärkungs-und/oder Befestigungsmittel aufweisen. **Figur 4** zeigt eine Beispiel eines solchen Verstärkungs- und/oder Befestigungsmittels in Form eines Verstärkungshalters 47, dessen Länge h der Modulhöhe H, d.h. der vertikalen (in Bezug auf die in den Figuren gezeichnete Orientierung) Ausdehnung eines Moduls 41 entspricht. Der Verstärkungshalter 47 weist auf der einen Seite einen Vorsprung 48 mit Aussengewinde auf, auf der anderen Seite eine entsprechende Bohrung 49 mit Innengewinde. Beim Stapel von Modulen 41 wird der Gewindezapfen 48 des Verstärkungshalters 47 in mit dem darunter liegenden Verstärkungshalter verschraubt. Dabei kann eine Schulter 50 des Verstärkungshalters das Gehäuse des zu befestigenden Moduls 41 gegen das Gehäuse des darunter liegenden Moduls bzw. die Oberseite des darunter liegenden Verstärkungshalters drücken und so die Module zugfest aneinander fixieren.

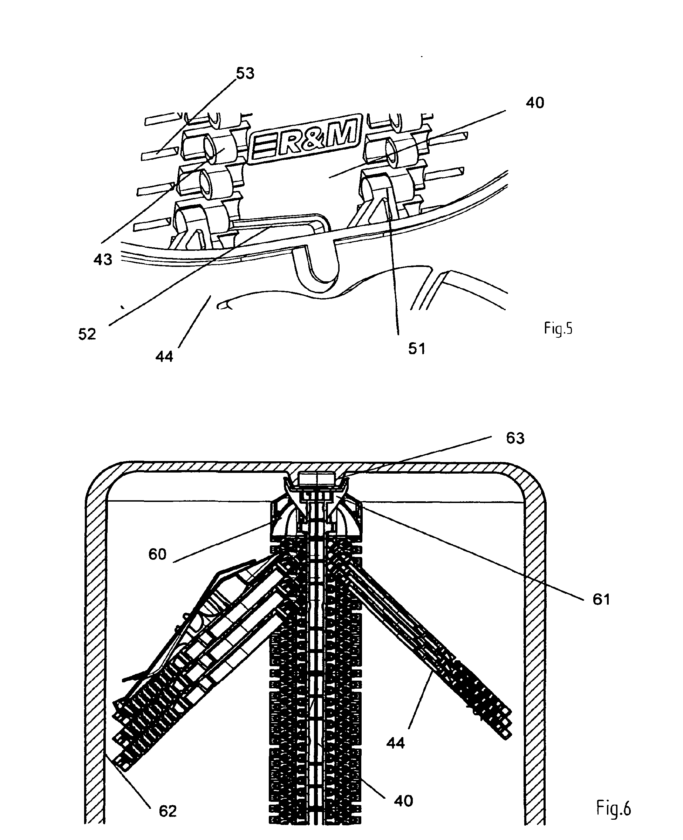

Eine Besonderheit der Befestigung der Spleisskassetten - oder anderen Elemente - an der Spleisskassetten-Aufnahme 40 ist in **Figur 5** dargestellt, welche ein Detail eines Scharniers zeigt. Wie man sieht ist die Zapfenführung 43 symmetrisch ausgestaltet, und die Drehzapfen 51, die zusammen mit den jeweiligen Zapfenführungen 43 das Scharnier bilden, können von beiden Seiten - in Figur 5 wie dargestellt von links, oder auch von rechts - eingeführt werden. Eine Klinke 52 verhindert ein unbeabsichtigtes Lösen der Spleisskassette. Durch diese Ausgestaltung wird ermöglicht, dass die Spleisskassette in zwei Orientierungen am der Spleisskassetten-Aufnahme 40 befestigtbar ist, d.h. der Benutzer kann wählen, welche Seite 'oben' und welche 'unten' ist. Die dadurch gewonnene Flexibilität kann bei einem umgekehrten Einbau (upside-down) der Muffe durchaus von Vorteil sein.

**Figur 6** zeigt eine Schnittdarstellung durch einen oberen Teil einer Kabelmuffe, d.h. den vom Muffenboden entfernten Ende der Kabelmuffe. Nebst der beschriebenen Spleisskassetten-Aufnahme 40 sieht man auch einen Abschluss 60, der oberseitig am obersten Modul 41 der Spleisskassetten-Aufnahme befestigt ist und an dieses anschliesst. Der Abschluss 60 weist eine Führungspartie 61 auf, die mit einem entsprechenden Führungselement 63 einer Muffenhaube 62 zusammenwirkt und die Spleisskassetten-Aufnahme gegen Auslenkungen des freien Endes sichert und solche Auslenkungen verhindert. Die Muffenhaube hat eine an die Grösse der gewählten Spleisskassetten-Aufnahme 40 angepasste Grösse. Bei einer nachträglichen Vergrösserung oder Verkleinerung der Spleisskassetten-Aufnahme durch Hinzufügen oder Entfernen eines Moduls muss die Muffenhaube ausgewechselt werden.

Nach Abschluss der Installationsarbeiten wird die Muffenhaube über den ganzen Aufbau gestülpt und am Muffenboden abgestützt. Muffenhauben dieser Art sind an sich bekannt. Durch den Ansatz gemäss dem hier beschriebenen Aspekt der Erfindung dient die Muffenhaube zusätzlich dem Zweck der mechanischen Stabilisierung der rahmenlosen Spleisskassetten-Aufnahme 40.

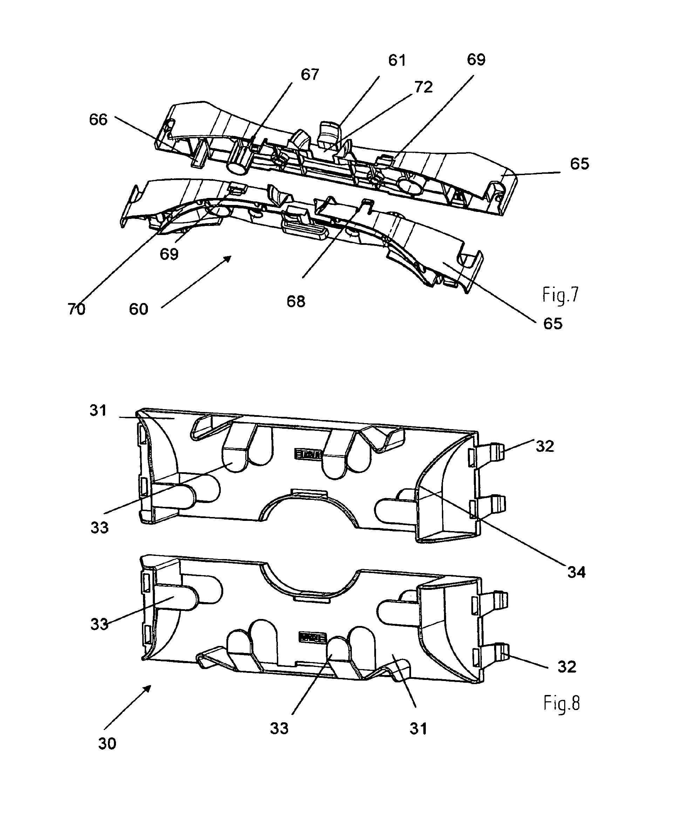

Wie in **Figur 7** dargestellt kann auch der Abschluss 60 aus zwei - in der Ausführungsform gemäss Figur 7 baugleichen - Schalen 65 hergestellt sein. Die beiden Schalen weisen Verrastungsstrukturen 66, 67, 68, 69 auf, die ein aneinander befestigen und verrasten der beiden Schalen ermöglichen. Hinzu kommen beispielsweise in der Figur nicht sichtbare Raststrukturen zum Verrasten des Abschlusses am obersten Modul der Spleisskassetten-Aufnahme. Es ist aber auch ein Verschrauben mit einem Verstärkungshalter (sofern vorhanden) oder einem Element der Spleisskassetten-Aufnahme möglich.

Nebst der Führungspartie 61 sieht man in Figur 7 auch, dass der Abschluss 60 auch eine Führungsrille 70 zum Führen von Fasern von einer Seite der Spleisskassetten-Aufnahme zur anderen aufweist. Ausserdem ist sind Spuren 72 zum Führen von Fasern übers Kreuz also von einer lateralen Seite vorderseits auf die kontralaterale Seite rückseits oder umgekehrt oder von der kontralateralen Seite vorderseits auf die laterale Seite rückseits oder umgekehrt vorhanden. Auch diese Massnahmen können dazu beitragen, dass der vorhandene Platz optimal genutzt werden kann.

Anhand der Figuren 8-10 wird nun die Ablageeinrichtung 30 für Bündelader-Überlängen genauer beschrieben. Diese weist im dargestellten Ausführungsbeispiel wie in **Figur 8** gut sichtbar mindestens zwei flexibel montierbare Halteschalen 31 auf. Die Halteschalen sind je mit vier Haltezungen 32 versehen, deren Ausgestaltung eine Montage am Aufteiler 10 und/oder an der Spleisskassetten-Aufnahme 40 erlaubt. Die Länge der Haltezungen kann bspw. der halben Dicke des Aufteilers und/oder der Spleisskassetten-Aufnahme entsprechen. Ausserdem weisen die Halteschalen je mindestens eine Rückhaltevorrichtung 33 auf, die ein Fixieren der - etwas biegesteifen - Bündelader erlauben. Wände 34 oder Rippen, die senkrecht zur Ebene liegen, in der die Bündeladern verlaufen, dienen als Führungsstrukturen für die Bündeladern.

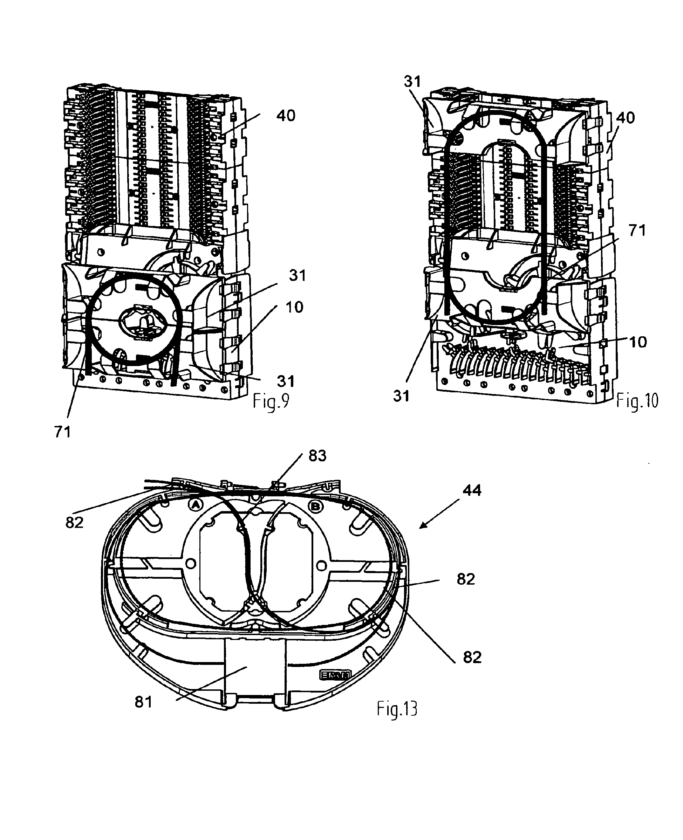

In der in **Figur 9** gezeigten Anordnung sind beide Halteschalen auf dem Aufteiler 10 montiert. Sie beeinträchtigen die - weiter unten noch näher beschriebene - Wirkungsweise des Aufteilers in keiner Weise. Vielmehr nutzen sie den innerhalb der Muffenhaube vorhandenen Raum optimal, indem sie ohne zusätzlichen Platzbedarf entlang des Aufteilers und der Spleisskassetten-Aufnahme zusätzlichen Stauraum für Bündeladern 71 schaffen, deren Fasern nicht gespleisst werden. Solche Bündelader können im zusätzlichen Stauraum sicher plaziert werden, bis sie für einen Anschluss gebraucht werden.

Im Unterschied zur hier explizit dargestellten Konfiguration ist zur Erweiterung des Stauraums auch eine Montage von zwei Ablageeinrichtungen 30, beispielsweise je bestehend aus zwei Halteschalen 31 oder einstückig, möglich. So kann zusätzlich eine Montage auf der anterioren Seite, bspw. direkt gegenüberliegen, erfolgen, so dass die Kapazität der in Figur 9 gezeigten Anordnung verdoppelt werden kann, erneut ohne zusätzlichen Platzbedarf.

Gemäss **Figur 10** ist es auch möglich, mindestens eine der Halteschalen 31 im Bereich der Spleisskassetten-Aufnahme 40 zu montieren, wodurch die Kapazität für die Bündeladerablage noch markant vergrössert werden kann. Die zusätzliche Montage von Spleisskassetten im von der Ablageeinrichtung und den Bündeladern eingenommenen Raum ist dann im Allgemeinen nicht möglich, so dass diese Ausführungsform für diejenigen Fälle geeignet ist, in denen der Bedarf an Spleissungen im Verhältnis zum Ablagebedarf für Bündeladern kleiner ist.

Im Unterschied zur dargestellten Ausführungsform sind auch einteilige Ablageeinrichtungen denkbar, d.h. ein zur Ausführungsform von Figur 9 funktionsgleiches Arrangement kann auch bewerkstelligt werden, wenn die Elemente der beiden Halteschalen von Figur 9 in einer einzigen, einstückigen Vorrichtung mit bspw. vier Haltezungen und der kumulierten Ausdehnung der beiden Halteschalen mit Zwischenraum vorhanden sind.

Die Befestigung der Ablageeinrichtung am Aufteiler und/oder an der Spleisskassetten-Aufnahme ist bei laufendem Betrieb möglich und beeinflusst die Sicherheit und die Gebrauchsmöglichkeiten der Faserführung in keiner Weise.

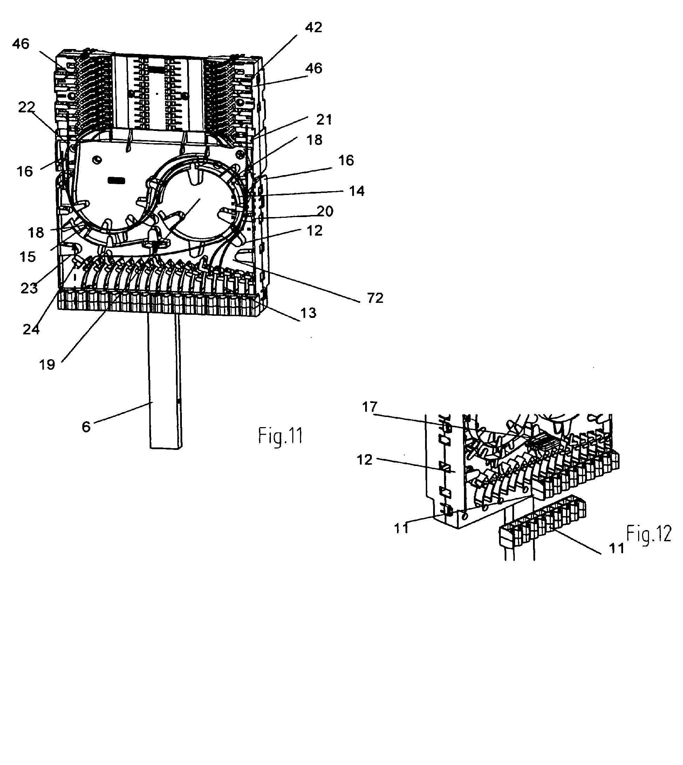

**Figur 11** zeigt eine Ansicht des Aufteilers 10, auf den ein Modul der Spleisskassetten-Aufnahme 40 aufgesetzt ist. Vom Aufteiler und vom Modul ist jeweils nur eine Schale dargestellt; in Ausführungsformen, in denen die erfindungsgemässe Vorrichtung eine Kabelmuffe bildet, werden die entsprechenden Schalen jeweils durch eine hinterseitige, beispielsweise baugleiche, zweite Schale ergänzt, die Rückseite-an-Rückseite mit der dargestellten Schale zusammengesetzt ist. Zwei Schalen bilden zusammen eine Einheit, wie sie im Allgemeinen bei Kabelmuffen verwendet werden Es versteht sich, dass bei einer Verwendung auf bspw. einem Paneel nur je eine Schale zum Einsatz kommt.

Der Sockel 6 weist wie in Figur 1 nur eine einzige, zentrale Trägerstange auf, wodurch er Freiraum schafft und die Handhabung von Bündeladern erleichtert. Es sind jedoch auch andere Sockelkonstruktionen denkbar, bspw. mit beidseitig befestigten Sockeln.

Wie man auch in **Figur 12** gut sieht ist der Aufteiler 10 aus einem Aufteiler-Körper 12 aus Kunststoff und der am Aufteiler-Körper befestigbaren Bündeladeraufnahme 11 zusammengesetzt. In Figur 12 sieht man auch eine Schnalle 17 für einen Befestigungsriemen, mit welchem die Spleisskassetten der ganzen Vorrichtung festgeschnallt und gegen Schwenkbewegungen gesichert werden können.

An die Bündeladeraufnahme 11 schliessen kanalartige Führungsstrukturen 13 des Aufteilers an, die so ausgebildet sind, dass sie die Bündeladern als Ganze oder alle in der Bündelader vorhandenen Fasern gleichzeitig aufnehmen können. Die kanalartigen Führungsstrukturen sind so ausgebildet, dass alle Fasern - mit möglichen, nachstehend noch diskutierten Ausnahmen am äussersten linken Rand - auf dieselbe Seite geführt werden, also in der Figur 11 nach rechts. Von dort ausgehend definieren Führungsstrukturen der Aufnahme zwei Spuren für die Fasern. Eine erste Spur führt im Wesentlichen gerade nach oben zu einer ersten Kopplungsstelle 21 mit dem in der Figur rechten Führungskanal 46 der Spleisskassetten-Aufnahme 40. Eine zweite Spur führt zu einer zweiten Kopplungsstelle 22 zum linken Führungskanal 46. Zu diesem Zweck sind eine erste, kreisbogenförmige Führungsrippe 14 sowie eine zweite, Abschnittsweise ebenfalls kreisbogenförmige Führungsrippe 15 vorhanden. Die Spur als Ganze verläuft S-förmig, d.h. auf einen mit mindestens einem vorgegebenen Minimalradius gekrümmten Abschnitt folgt ein zweiter, in die umgekehrte Richtung und ebenfalls mindestens mit dem vorgegebenen Minimalradius gekrümmter Abschnitt. Sowohl auf der ersten Spur als auch auf der zweiten Spur ist je ein Durchbruch 16 vorhanden, durch welchen beliebige Fasern auch auf die Rückseite geführt werden können.

Entlang der Spuren sind in an sich bekannter Art Rückhaltemittel 18 angeordnet, unter denen die Fasern verlaufen und die ein Entweichen der biegesteifen Fasern in anteriore Richtung verhindern.

In einen von der ersten kreisbogenförmigen Führungsrippe 14 definierter Innenraum 19 ist über eine Durchführung am in der Figur linken Rand können Fasern (nicht gezeichnet) eingelegt werden, wodurch dieser Innenraum als Faserüberlängenspeicher dienten kann und Platz für Reserveschlaufen bietet. Charakteristisch an der hier beschriebenen Ausgestaltung ist, dass eine Verzweigungsstelle 20 vorhanden ist, von der aus im Wesentlichen alle von der Bündeladeraufnahme 11 herkommenden Fasern gleichsinnig laufend, d.h. mit einer gemeinsamen Richtungsführung wahlweise auf die eine oder andere Seite, d.h. auf die erste Kopplungsstelle 21 oder die zweite Kopplungsstelle 22 und gegebenenfalls auch auf die Vorder- und die Rückseite (also auf die dann insgesamt vier Führungskanäle 46) verteilt werden können. Ein Auskreuzfeld von von links kommenden Fasern mit von rechts kommenden Fasern, wie das der Stand der Technik für die Führung von Fasern mit möglichem Seitenwechsel vorsieht, ist nicht vorgesehen. Trotzdem kann sich die Bündeladeraufname auf die gesamte Breite des Aufteilfeldes erstrecken.

Ein Vorteil dieser Vorgehensweise ist, dass ab der genannten Verzweigungsstelle 20 ein Umleiten- oder Neu-Verteilen der Fasern jederzeit ohne Probleme möglich ist und kein Ausfädeln von anderen Fasern bedingt. Es kann also beispielsweise eine auf der zweiten Spur nach links geführte Faser auf die erste Spur umgelegt werden, ohne dass andere Fasern entfernt werden müssten und ohne dass die betreffende Faser aufgeschnitten oder der Spleiss gelöst werden müsste.

Wie durch den gestrichelten Pfeil 23 angedeutet, kann vorgesehen sein, dass ganz links eintreffende Fasern oder Faserbündel an der Verteilstelle 20 vorbei direkt entlang der linken Seite zur zweiten Kopplungsstelle geführt werden. Diese Möglichkeit ist vorzugsweise, sofern sie existiert, eine Option, d.h. es kann vorgesehen sein, dass auch ganz links eintreffende Fasern wahlweise zur Verzweigungsstelle 20 führbar sind. In gezeichneten Beispiel ist das der Fall, da Führungsmittel 24 zum Führen der Fasern zur Verzweigungsstelle 20 auf für die äussersten Fasern vorhanden sind. Diese direkte Führung nicht über die Verzweigungsstelle 20 kann jedoch auch für einen kleinen Anteil der Fasern zwingend sein.

**Figur 13** zeigt eine Ausführungsform einer Spleisskassette 44 mit einer Spleissregion 81, in welche ein den spezifischen Anforderungen entsprechender Spleissschutzhalter (nicht gezeigt) eingesetzt werden kann. Proximal (d.h. zum Scharnier hin) können von beiden Seiten von den Führungskanälen 46 her kommende Fasern entlang der Oberfläche der Spleisskassetten geführt werden. Dabei sind die Führungsmittel der Spleisskassette so ausgebildet, dass sich eine Möglichkeit für einen Richtungswechsel ergibt. Das ist in der Figur 13 schematisch dargestellt. Eine erste von links kommende Faser 82 wird einer ersten Spur folgend zunächst in einen inneren Bereich umlaufend geführt und kommt dann in einem von rechts her zur Spleissregion. Das Umlaufen um einen inneren Bereich dient nur der Handhabung (Stauraum) der vorhandenen Faserlänge; es ist im Prinzip nicht notwendig. Eine zweite von links kommende Faser 83 wird auf einer zweiten Spur durch die Mitte und in einem einen rechten Bereich umlaufenden Bogen von links her auf die Spleissregion zugeführt. Daher können von zwei von der selben Seite (bspw. von links) kommende Fasern miteinander verspleisst werden. Dasselbe gilt natürlich umgekehrt auch für von rechts kommende Fasern.

Insgesamt bestehen also für von jeder Seite kommende Fasern auf der Spleisskassette zwei Spuren, über welche die Fasern in zueinander gegenläufigen Richtungen zur Spleissregion führbar sind, selbstverständlich jeweils unter Einhaltung der geltenden Minimalradien.

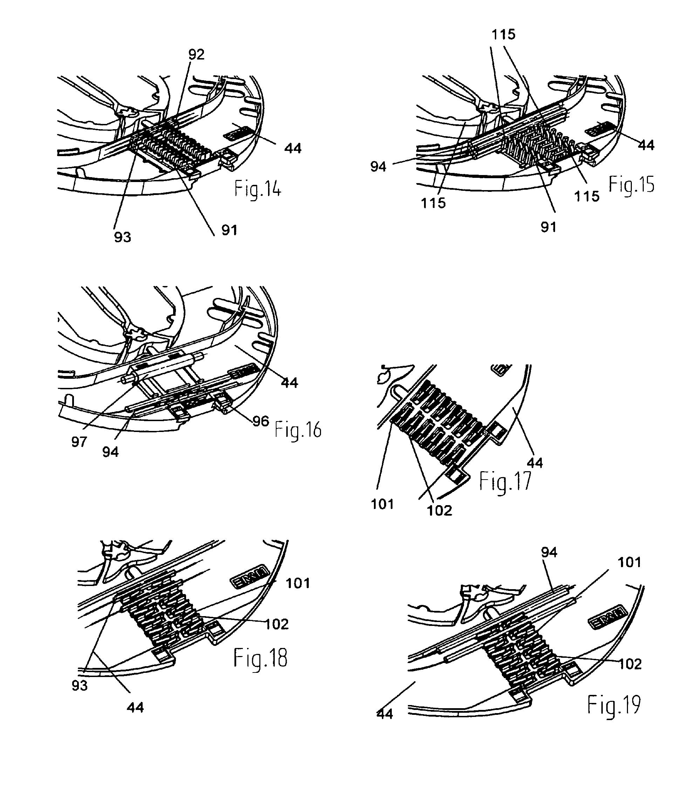

**Figur 14** zeigt ein erstes Beispiel eines Spleissschutzhalters 91 (oft auch nur 'Spleisshalter' genannt), in welchem eine Mehrzahl von Spleissschutzeinrichtungen 93 einer ersten, kommerziell erhältlichen Art (Typ ANT) zwischen Führungsrippen 92 gehalten werden kann. Der Spleisschutzhalter ist so ausgebildet, dass jeweils zwei Spleisse übereinander angeordnet werden können, und eine Vielzahl von Spleissen oder Spleiss-Paaren nebeneinander. Der Spleissschutzhalter 91 gemäss **Figur 15** dient dem Halten und Führen einer Mehrzahl von Spleissschutzeinrichtungen 94 einer zweiten, kommerziell erhältlichen Art (Typ 'Heat Shrink'). Es können jeweils drei Spleisse übereinander und eine Vielzahl von Spleissen, Spleiss-Paaren oder Spleiss-Tripletten nebeneinander angeordnet werden.

Sowohl im Beispiel gemäss Figur 14 als auch im Beispiel gemäss Figur 15 sind die Spleisshalter so ausgebildet, dass die Spleissschutzeinrichtungen mit den Spleissen an definierten Orten festgeklemmt werden.

**Figur 16** zeigt ein Beispiel eines kombinierten Spleiss- und Splitter- (Strahlteiler-) Halters 96. Für den Strahlteiler 97 ist eine flexible Ablage vorgesehen; der Splitter kann bspw. durch Kabelbinder fixiert werden. Die Spleisse - im abgebildeten Beispiel sind zur Illustration Spleisschutzeinrichtungen 93, 94 beider Typen dargestellt - werden wie in den vorliegenden Ausführungsbeispielen geklemmt.

Die in den **Figuren 17-19** dargestellte Spleisskassette 44 unterscheidet sich von den vorstehend beschriebenen Spleisskassetten erstens durch die Dimensionierung: ihre Dicke (gemäss der Tiefe der Führungsstrukturen) ist geringer und eignet sich nicht für die Führung mehrerer Spleissschutzeinrichtungen übereinander. Zweitens unterscheidet sich die Spleisskassette gemäss Figuren 17-19 von den vorstehend beschriebenen Spleisskassetten dadurch, dass der Spleisshalter nicht als separater, flexibel auswechselbarer Einsatz vorhanden ist sondern einstückig mit dem Spleisskassettenkörper ausgeformt ist. Diese beiden Unterschiede könnten auch je für sich allein verwirklicht sein, d.h. es könnte auch in einer ,flachen' Spleisskassette wie in Figuren 17-19 ein Spleisshalter-Einsatz eingesetzt werden, und es könnte auch in einer ,tiefen' Spleisskassette wie in Figuren 14-16 ein mit dem Spleisskassettenkörper einstückig ausgeformter Spleisshalter vorhanden sein.

Eine weitere Spezialität des in Figuren 17-19 gezeigten Spleisshalters ist die Verwendbarkeit für beide gängigen Spleissschutz-Typen. Zwischen bis zu einem gewissen Grad flexiblen Haltezungen 101, 102 sind erste, weniger breite Kanäle zum Führen der Spleisschutzeinrichtungen vom Typ ANT 93 ausgebildet (Figur 18), und diese Kanäle sind alternierend mit zweiten, breiteren Kanälen zum Führen von Spleissschutzeinrichtungen vom Typ 'Heat Shrink' 94 vorhanden (Figur 19). Zu diesem Zweck sind die Haltezungen alternierend ausseinseitig und innenseitig fixiert, d.h. Haltezungen eines ersten Typs 101 sind innenseitig festgemacht und können auf der Aussenseite (in Fig. 17 oben rechts und unten links) flexibel nachgeben, während die alternierend angebrachten Haltezungen eines zweiten Typs 102 aussenseitig festgemacht sind und auf der Innenseite ausweichen können. Ausserdem sind die Haltezungen im in Figur 17 dargestellten kraftfreien Zustand leicht von der axialen Richtung weg ausgelenkt. Wenn Spleisse in den ersten Kanälen vorhanden sind, dienen die Haltezungen des ersten Typs als starre Wände und die Haltezungen des zweiten Typs als flexible Federn. Umgekehrt dienen für Spleisse in den zweiten Kanälen die Haltezungen des ersten Typs als flexible Federn und die Haltezungen des zweiten Typs als starre Wände.

Es kann also unabhängig vom verwendeten Spleissschutz der gleiche Typ Spleisskassette verwendet werden, und ein Auswechseln der Spleisskassette ist auch bei einem Wechsel des Spleissschutztyps nicht notwendig. Dabei ist zwar nicht vorgesehen, dass Spleissschutzeinrichtungen unterschiedlicher Typen unmittelbar nebeneinander geführt sind, aber die gleichzeitige Verwendung unterschiedlicher Spleissschutztypen auf derselben Spleisskassette ist ohne Weiteres möglich.

Spleisskassetten mit der hier beschriebenen Spezialität der Aufnahme von Spleissen unterschiedlichen Typs können unabhängig von der Art des verwendeten Aufteilers und von der Spleisskassetten-Aufnahme zum Einsatz kommen.

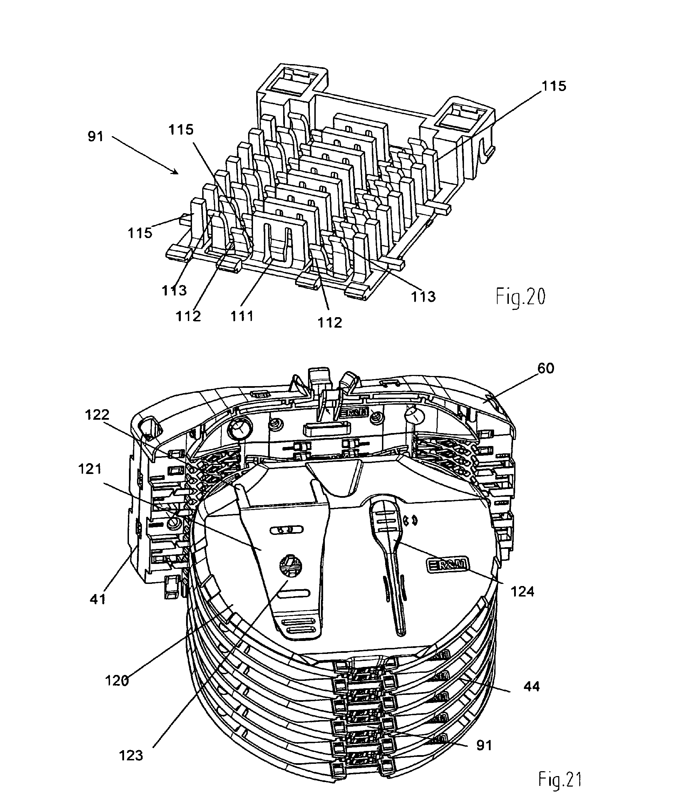

In **Figur 20** ist zur Illustration des fünften Aspekts der Erfindung der Spleissschutzhalter 91 gemäss Figur 15 gezeigt. Übereinander liegende Spleissschutzeinrichtungen - hier des Typs 'Heat Shrink' - werden einzeln gehalten und geklemmt. Zu diesem Zweck sind erste Spleissklemmmittel 111, zweite Spleissklemmmittel 112 und dritte Spleissklemmmittel 113 vorhanden. Die ersten, zweiten und dritten Spleissklemmmittel sind zueinander in axialer Richtung (in Bezug auf die Fasern) versetzt angeordnet. Die ersten Spleissklemmmittel 111 üben federartig eine Klemmkraft auf die Spleissschutzeinrichtungen der untersten Ebene aus, die zweiten Spleissklemmmittel 112 auf die Spleissschutzeinrichtungen der zweiten Ebene, und die dritten Spleissklemmmittel 113 auf die Spleissschutzeinrichtungen der obersten Ebene. Die ersten Spleissklemmmittel sind an einem oberseitigen Steg befestigt und ragen von diesem nach unten, während die zweiten und dritten Spleissklemmmittel von einer unteren Ebene nach oben ragen. Zu den Spleissklemmmitteln bspw. axial versetzte, formsteife Führungsmittel 115 dienen zur Stützung und als Widerlager, durch welches die Gegenkraft zur Federkraft ausgeübt wird.

In **Figur 21** sieht man ein oberstes Modul 41 der Spleisskassetten-Aufnahme und den Abschluss 60. An der Spleisskassetten-Aufnahme ist eine Mehrzahl von Spleisskassetten der vorstehend diskutierten Art befestigt. Ausserdem ist ein in der dargestellten Ausführungsform an einer Spleisskassette durch eine Rastverbindung befestigbarer Werkzeughaltedeckel 120 zu sehen. Dieser dient einerseits dem mechanischen Schutz. Andererseits kann er dazu verwendet werden, spezialisierte, (nur) in der Kabelmuffe benötigte Werkzeuge zu verstauen. Eines dieser Werkzeuge ist in der dargestellten Ausführungsform ein Kassettenhalter 121. Dieser weist zwei Befestigungszungen 122 auf, welche in entsprechende Schlitze 53 (in Figuren 2 und 5 dargestellt) eingeführt werden können. Eine Stützpartie 123 des Kassettenhalters kann dann die entsprechende Spleisskassette und alle darüber liegenden Kassetten in einer hochgeklappten Anordnung stützen, wodurch eine Bearbeitung/ein Umorganisieren von Fasern auf der darunter liegenden Spleisskassette erleichtert wird. Ein zweites dargestelltes Werkzeug ist ein Dressierstift 124.

## Patentansprüche

1. Vorrichtung zur Ablage und Handhabung von Lichtwellenleitern, aufweisend eine Spleisskassetten-Aufnahme (40) und einen Aufteiler (10) zum individuellen Führen von als Faserbündeln herangeführten Lichtwellenleiter-Fasern, wobei die Spleisskassetten-Aufnahme mindestens einen Führungskanal (46) aufweist und die Fasern vom Aufteiler zum Führungskanal bzw. zu einem der Führungskanäle (46) führbar sind, und wobei die Spleisskassetten-Aufnahme (40) Mittel zum Halten einer Mehrzahl von Spleisskassetten oder anderen Faserführungsmitteln aufweist, **dadurch gekennzeichnet, dass** die Spleisskassetten-Aufnahme (40) mindestens ein Modul (41) aufweist, welches selbsttragend ist und dafür ausgerüstet ist, mit weiteren gleichartigen Modulen (41) zu einer selbsttragenden Struktur zusammengesetzt zu werden, wobei baugleiche Module (41) aufeinander aufschnappbar sind, so dass die Grösse der Spleisskassetten-Aufnahme (40) durch Aneinanderreihung einer frei wählbaren Anzahl von Modulen (41) ausbaubar ist.

2. Vorrichtung nach Anspruch 1, **dadurch gekennzeichnet, dass** das mindestens eine Modul (41) aus zwei Modul-Schalen (42) zusammengesetzt ist, welche Rückseite-an-Rückseite aneinander befestigt sind.

3. Vorrichtung nach Anspruch 1 oder 2, **dadurch gekennzeichnet, dass** das mindestens eine Modul (41) der Spleisskassetten-Aufnahme (40) auf zwei lateralen Seiten vorder- und rückseitig je einen der Führungskanäle (46) zur Führung von Fasern aufweist, wodurch insgesamt mindestens vier Führungskanäle vorhanden sind.

4. Vorrichtung nach einem der vorhergehenden Ansprüche, **dadurch gekennzeichnet, dass** die Mittel (43) zum Halten einer Mehrzahl von Spleiskassetten (44) oder anderen Faserführungsmitteln eine schwenkbare Befestigung der Spleisskassetten oder anderen Faserführungsmittel erlauben und symmetrisch sind in dem Sinn, dass sie eine schwenkbare Befestigung der Spleisskassetten oder anderen Faserführungsmittel in zwei sich um 180° unterscheidenden Orientierungen ermöglichen.

5. Vorrichtung nach einem der vorangehenden Ansprüche, **dadurch gekennzeichnet, dass** sie als Kabelmuffe (1) ausgebildet ist und einen Muffenboden (2) mit einer Mehrzahl von Durchführungen (3) zum Durchführen von in Bündeladern und/oder in Kabeln gebündelten Lichtwellenleiter-Fasern, sowie eine Tragstruktur (6) zum Halten des Aufteilers (10) und der Spleisskasseten-Aufnahme (40) sowie eine Muffenhaube (62) aufweist, wobei die Spleisskassetten-Aufnahme (40) auf der vom Muffenboden (2) entfernten Seite des Aufteilers (10) angeordnet ist.

6. Vorrichtung nach Anspruch 5, **gekennzeichnet durch** einen Abschluss (60), der die auf der vom Muffenboden (2) entfernten Seite an der Spleisskassetten-Aufnahme (40) befestigt ist und eine Führungspartie (61) aufweist, die mit einem Führungselement (63) der Muffenhaube (62) zusammenwirkt und die Spleisskassetten-Aufnahme (40) gegen Auslenkungen eines freien Endes sichert.

7. Vorrichtung nach Anspruch 6, **dadurch gekennzeichnet, dass** der Abschluss Führungsstrukturen (70) zum Führen von Fasern von einem Führungskanal (46) der Spleisskassetten-Aufnahme (40) zum anderen aufweist.

8. Vorrichtung, nach einem der vorangehenden Ansprüche, **gekennzeichnet durch** eine Ablageeinrichtung (30) für Bündelader-Überlängen, welche auf dem Aufteiler (10) und/oder auf der Spleisskassetten-Aufnahme (40) befestigbar ist und die Ablage mindestens einer Bündelader in einer oder mehreren Schleifen ermöglicht, die in einer Ebene verlaufen, die von einer **durch** die Ablageeinrichtung (10) definierten Faserebene verschieden ist, wobei die Ablageeinrichtung (30) vorzugsweise mindestens zwei Halteschalen (31) aufweist, die in einem flexiblen Abstand zueinander montierbar sind und auf denen und/oder zwischen denen die Bündeladern in Schleifen ablegbar sind.

9. Vorrichtung nach Anspruch 8, **dadurch gekennzeichnet, dass** die Ablageeinrichtung (30) auf den Aufteiler und/oder die Spleisskassetten-Aufnahme (40) aufschnappbar ist.

10. Vorrichtung nach einem der vorangehenden Ansprüche, **dadurch gekennzeichnet, dass** der Aufteiler (10) Führungsstrukturen aufweist, welche ein Führen von im Wesentlichen allen von einer proximalen Seite herangeführten Fasern oder Bündeladern an eine Verzweigungsstelle (20) ermöglicht, von welcher aus die Führungsstrukturen eine erste und eine zweite Spur definieren, wobei die erste Spur zu einer ersten lateralen Kopplungsstelle (21) führt, von welcher aus die Fasern in einen ersten der Führungskanäle (46) überführbar sind, und wobei die zweite Spur zu einer zweiten, zur ersten Kopplungsstelle kontralateralen Kopplungsstelle (22) führt, von welcher aus die Fasern in einen zweiten der Führungskanäle (46) überführbar sind.

11. Vorrichtung nach Anspruch 10, **dadurch gekennzeichnet, dass** der Aufteiler mindestens einen Durchbruch (16) zum Führen einer Faser von der Vorder- auf die Rückseite oder von der Rück- auf die Vorderseite aufweist.

12. Vorrichtung nach Anspruch 10 oder 11, **dadurch gekennzeichnet, dass** die zweite Spur einen im Wesentlichen S-förmigen Verlauf hat.

13. Vorrichtung nach einem der vorangehenden Ansprüche, aufweisend mindestens eine Spleisskassette (44), wobei die Spleisskassette einen Spleissschutzhalter zum individuellen Halten einer Mehrzahl von Spleissschutzeinrichtungen (93, 94) aufweist, und wobei mindestens zwei Spleissschutzeinrichtungen übereinander führbar sind **dadurch gekennzeichnet, dass** der Spleissschutzhalter erste und zweite Klemmmittel (111, 112, 113) für das individuelle Festklemmen der übereinander geführten ersten bzw. zweiten Spleissschutzeinrichtung aufweist, und dass die ersten und zweiten Klemmmittel zueinander in axialer Richtung versetzt angeordnet sind.

14. Vorrichtung nach einem der vorangehenden Ansprüche, **dadurch gekennzeichnet, dass** das mindestens eine Modul (41) beidseitig je einen Führungskanal aufweist und dass der Aufteiler (10) zwischen dem Ort, wo die Faserbündel in die Vorrichtung münden und der Spleisskassetten-Aufnahme (40) angeordnet ist.

## Claims

1. Device for storage and handling of optical waveguides, comprising a splice cassette receptacle (40) and a distributor (10) for the individual guidance of optical-waveguide fibres adducted as fibre bundles, wherein the splice cassette receptacle comprises at least one guiding channel (46) and the fibres are guidable from the distributor to the guiding channel respectively to one of the guiding channels (46), and wherein the splice cassette receptacle (40) comprises means for holding a plurality of splice cassettes or of other fibre guiding means, **characterized in that** the splice cassette receptacle (40) comprises at least one module (41) which is self-supporting and is equipped to be combined into a self-supporting structure together with further modules (41) of the same kind, wherein modules (41) of identical construction are snapable upon each other, such that the size of the splice cassette receptacle (40) is extendable by way of stringing together a freely selectable number of modules (41).

2. Device according to claim 1, **characterized in that** the at least one module (41) is constructed from two module shells (42), which are fastened to each other rear side-to-rear side.

3. Device according to claim 1 or 2, **characterized in that** the at least one module (41) of the splice cassette receptacle (40) comprises on two lateral sides, on respective front faces and rear faces, a respective one of the guiding channels (46) for the guidance of fibres, as a result of which there are at least four guiding channels in total.

4. Device according to one of the preceding claims, **characterized in that** the means (43) for holding a plurality of splice cassettes (44) or of other fibre guiding means permits pivotable fastening of the splice cassettes or other fibre guiding means and are symmetrical in such a manner that they allow a pivotable fastening of the splice cassettes or other fibre guiding means in two orientations that differ by 180°.

5. Device according to one of the preceding claims, **characterized in that** it is embodied as a cable sleeve (1) and comprises a sleeve bottom (2) with a plurality of through-passages (3) for guiding through optical-waveguide fibres that are bundled in bundle cores and/or in cables, and comprising a support structure (6) for holding the distributor (10) and the splice cassette receptacle (40) as well as a sleeve closure (62), the splice cassette receptacle (40) being arranged on the side of the distributor (10) that is spaced apart from the sleeve bottom (2).

6. Device according to claim 5, **characterized by** a closure (60) that is fastened at the splice cassette receptacle (40), on the side that is spaced apart from the sleeve bottom (2), and has a guidance portion (61) which acts together with a guiding element (63) of the sleeve closure (62) and secures the splice-cassette receptacle (40) against deflections of a free end.

7. Device according to claim 6, **characterized in that** the closure comprises guiding structures (70) for guiding fibres from one guiding channel (46) of the splice-cassette receptacle (40) to the other one.

8. Device according to one of the preceding claims, **characterized by** a storage device (30) for bundle-core overlengths, which can be fastened on the distributor (10) and/or on the splice-cassette receptacle (40) and allows storage of at least one bundle-core in one or several loops, which run in a plane that differs from a fibre plane defined by the storage device (30), the storage device (30) preferably comprising at least two holding shells (31), which are mountable in a flexible distance from each other and on which and/or between which the bundle cores can be deposited in loops.

9. Device according to claim 8, **characterized in that** the storage device (30) is engageable onto the distributor and/or the splice cassette receptacle (40).

10. Device according to one of the preceding claims, **characterized in that** the distributor (10) has guiding structures allowing a guidance of substantially all fibres or bundles adducted from a proximal side to a branching point (20), starting from which the guiding structures define a first track and a second track, wherein the first track leads to a first, lateral coupling point (21) from which the fibres can be conveyed into a first one of the guiding channels (46), and wherein the second track leads to a second coupling point (22) which is counter-lateral to the first coupling point and from which the fibres can be conveyed into a second one of the guiding channels (46).

11. Device according to claim 10, **characterized in that** the distributor has at least one through-opening (16) for guiding a fibre from the front face to the rear face or from the rear face from the front face.

12. Device according to claim 10 or 11, **characterized in that** the second track has a substantially S-shaped course.

13. Device according to one of the preceding claims, comprising at least one splice cassette (44), wherein the splice cassette comprises a splice protection holder for individually holding a plurality of splice-protection devices (93, 94), and wherein at least two splice protection devices are guidable one above the other one, **characterized in that** the splice protection holder comprises first and second clamping elements (111, 112, 113) for the individual clamping of the first respectively second splice protection devices which are guided one above the other one, and that the first and second clamping elements are arranged offset with respect to each other in an axial direction.

14. Device according to one of the preceding claims, **characterized in that** the at least one module (41) comprises on both sides one respective guiding channel, and that the distributor (10) is arranged between the location where the fibre bundles end into the device and the splice cassette receptacle (40).

## Revendications

1. Dispositif pour le stockage et la manipulation des conducteurs optiques, comprenant une réception des boîtiers d'épissurage (40) et un distributeur (10) pour le guidage indivuel des fibres conducteur-optiques amenées en forme de faisceau des fibres, la réception des boîtiers d'épissurage comprenant au moins un canal de guidage (46) et les fibres étant guidables du distributeur au canal de guidage respectivement à un des canaux de guidage (46), et la réception des boîtiers d'épissurage (40) comprenant des moyens pour tenir une pluralité des boîtiers d'épissurage ou des autres moyens de guider des fibres, **caractérisé en ce que** la réception des boîtiers d'épissurage (40) comprend au moins un module (41) lequel est autoporteur et équipé pour être assemblé avec des autres modules (41) du même type pour former une structure autoporteuse, des modules (41) identiques de construction étant enclenchables l'un sur l'autre, en sorte que la taille de la réception des boîtiers d'épissurage (40) soit extensible par le biais de mettre bout à bout un nombre librement sélectionnable des modules (41).

2. Dispositif selon la revendication 1, **caractérisé en ce que** l'au moins un module (41) est composé de deux coupelles de module (42), lesquelles sont fixées l'une à l'autre avec ses respectives faces arrières.

3. Dispositif selon la revendication 1 ou 2, **caractérisé en ce que** l'au moins un module (41) de la réception des boîtiers d'épissurage (40) comprend sur deux faces latérales, de face et à l'arrière, respectivement un des canaux de guidage (46) pour guider des fibres, moyennant quoi il y a totalement au moins quatre canaux de guidage.

4. Dispositif selon l'une quelconque des revendications précédentes, **caractérisé en ce que** les moyens (43) pour tenir une pluralité des boîtiers d'épissurage (44) ou des autres moyens de guider des fibres permettent une fixation pivotable des boîtiers d'épissurage ou des autres moyens de guider des fibres, et sont symmétriques dans le sens qu'ils rendent possible une fixation pivotable des boîtiers d'épissurage ou des autres moyens de guider des fibres dans deux orientations différentes par 180°.

5. Dispositif selon l'une quelconque des revendications précédentes, **caractérisé en ce qu'**il est implémenté comme manchon de câble (1) et comprend un fond de manchon (2) avec une pluralité des traversées (3) pour passer des fibres conducteur-optiques fasciculées en brins de faisceau et/ou en cables, et comprend une structure supportant (6) pour tenir le distributeur (10) et la réception des boîtiers d'épissurage (40), et comprend aussi un manchon de fermeture (62), la réception des boîtiers d'épissurage (40) étant disposée à ce coté du distributeur (10) lequel est éloigné du fond de manchon (2).

6. Dispositif selon la revendication 5, **caractérisé par** une fermeture (60), laquelle est fixée à la réception des boîtiers d'épissurage (40) au coté éloigné du fond de manchon (2), et comprend une partie de guidage (61) laquelle agit ensemble avec un élément de guidage (63) du manchon de fermeture (62) et sauvegarde la réception des boîtiers d'épissurage (40) contre des déflections d'un bout libre.

7. Dispositif selon la revendication 6, **caractérisé en ce que** la fermeture présente des structures de guidage (70) pour guider des fibres d'un canal de guidage (46) de la réception des boîtiers d'épissurage (40) à l'autre.

8. Dispositif selon l'une quelconque des revendications précédentes, **caractérisé par** un appareil de stockage (30) pour des surlongeurs des brins de faisceau, lequel appareil de stockage (30) étant fixable sur le distributeur (10) ou sur la réception des boîtiers d'épissurage (40) et permettant le stockage d'au moins un brin de faisceau dans une ou plusieurs boucles s'étendant dans un plan différent d'un plan des fibres défini par l'appareil de stockage (10), l'appareil de stockage (10) comprenant préférablement au moins deux coupelles tenants (31) lesquelles peuvent être montées dans une distance flexible l'une de l'autre et sur lesquelles et/ou entre lesquelles les brins de faisceaux sont déposables dans des boucles.

9. Dispositif selon la revendication 8, **caractérisé en ce que** l'appareil de stockage (30) est enclenchable sur le distributeur et/ou sur la réception des boîtiers d'épissurage (40).

10. Dispositif selon l'une quelconque des revendications précédentes, **caractérisé en ce que** le distributeur (10) présente des structures de guidage, lesquelles permettent à guider substantiellement toutes les fibres ou brins de faisceau amenées d'une face proximale à un point de branchement (20), duquel les structures de guidage définent une piste première et une piste deuxième, la piste première menant à un premier point de couplage (21) latéral, duquel les fibres peuvent être transférées dans un premier des canaux de guidage (46), et la piste deuxième menant à un deuxième point de couplage (22), lequel est contralatéral au premier point de couplage et duquel les fibres peuvent être transférées dans un deuxième des canaux de guidage (46).

11. Dispositif selon la revendication 10, **caractérisé en ce que** le distributeur comprend au moins une percée (16) pour guider une fibre de la face avant à la face arrière ou de la face arrière à la face avant.

12. Dispositif selon la revendication 10 ou 11, **caractérisé en ce que** la piste deuxième a un cours essentiellement en forme de S.

13. Dispositif selon l'une quelconque des revendications précédentes, comprenant au moins un boîtier d'épissurage (44), le boîtier d'épissurage présentant un porte-garde d'épissurage pour tenir individuellement une pluralité des appareils garde d'épissurage (93, 94), et au moins deux appareils gardes d'épissurage étant guidables l'un au-dessus de l'àutre, **caractérisé en ce que** le porte-garde comprend des moyens de serrage premièrs et deuxièmes (111, 112, 113) pour individuellement coincer les appareils garde d'épissurage premier respectivement deuxieme guidés l'un au-dessus de l'autre, et **en ce que** les moyens de serrage premièrs et deuxièmes sont disposés, l'un relativement à l'autre, décalés dans une direction axiale.

14. Dispositif selon l'une quelconque des revendications précédentes, **caractérisé en ce que** l'au moins un module (41) présent des deux cotés respectivement un canal de guidage, et que le distributeur (10) est disposé entre le lieu où les faisceaux de fibres débouchent dans le dispositif et la réception des boîtiers d'épissurage (40).
